# EUROPEAN PATENT APPLICATION

(11) **EP 1 435 747 A1**
(43) Date of publication of application: **07.07.2004**
(21) Application number: 02293274.3
(22) Date of filing: 31.12.2002
(51) Int. Cl.: H04Q 7/38

(54) **interference reduction for a priority connection by modifying a communication charcteristic of another connection**

(71) Applicant: Motorola Inc., Schaumburg, IL 60196 (US)
(72) Inventor: Fouilland, Pascal, Tournefeuille 31170 (FR)
(74) Representative: Litchfield, Laura Marie

(57) **Abstract**

The invention relates to a communication system comprising a first communication means (201,211) for communicating to a first communication unit (221) in a first area and a second communication means (203, 225) for communicating to a second communication unit (229) in a second area. The first communication means (201,211) determines that a message is a priority message and communicates associated priority message information to the second communication means (203, 225). The second communication means (203,225) modifies a communication characteristic of the communication with the second communication unit in response to the communication priority message information such that interference to the priority message is reduced. Specifically, transmissions may be ceased during the time interval in which the priority message is transmitted. This results in reduced interference to the priority message and thus increased reliability and reduced error rate.

## Description

### Field of the invention

The invention relates to a communication system and method of interference reduction therefor and in particular to a system for reducing interference to priority messages in a cellular communication system.

### Background of the Invention

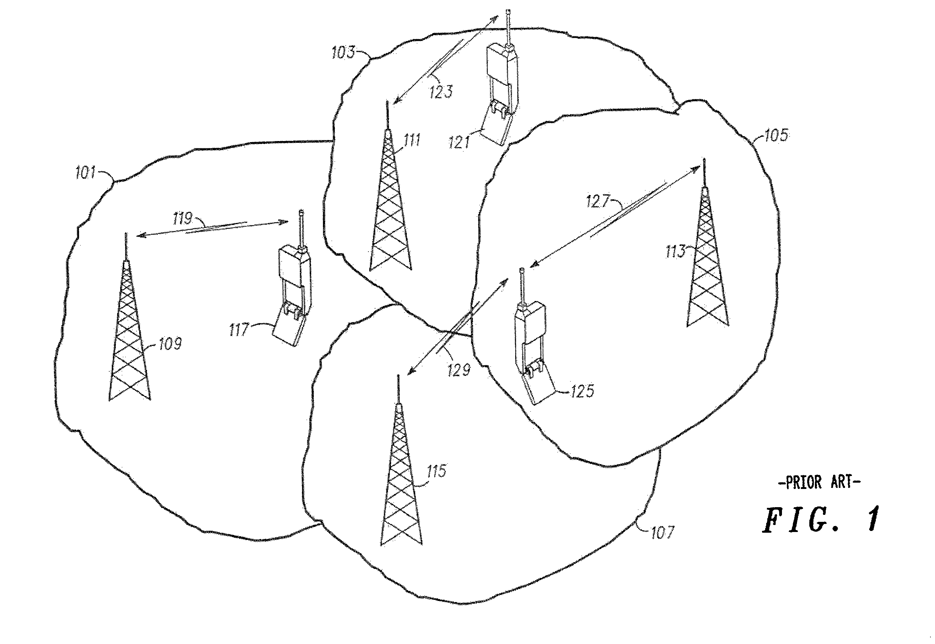

FIG. 1 illustrates the principle of a conventional cellular communication system 100 in accordance with prior art. A geographical region is divided into a number of cells 101, 103, 105, 107 each of which is served by base station 109, 111, 113, 115. The base stations are interconnected by a fixed network which can communicate data between the base stations 109, 111, 113, 115. A mobile station is served via a radio communication link by the base station of the cell within which the mobile station is situated. In the example of FIG. 1, mobile station 117 is served by base station 109 over radio link 119; mobile station 121 is served by base station 111 over radio link 123 and so on.

As a mobile station moves, it may move from the coverage of one base station to the coverage of another, i.e. from one cell to another. For example mobile station 125 is initially served by base station 113 over radio link 127. As it moves towards base station 115, it enters a region of overlapping coverage of the two base stations 113 and 115, and within this overlap region, it changes to be supported by base station 115 over radio link 129. As the mobile station 125 moves further into cell 107, it continues to be supported by base station 115. This is known as a handover or handoff of a mobile station between cells.

A typical cellular communication system extends coverage over typically an entire country and comprises hundreds or even thousands of cells supporting thousands or even millions of mobile stations. Communication from a mobile station to a base station is known as uplink, and communication from a base station to a mobile station is known as downlink.

The fixed network interconnecting the base stations is operable to route data between any two base stations, thereby enabling a mobile station in a cell to communicate with a mobile station in any other cell. In addition the fixed network comprises gateway functions for interconnecting to external networks, such as the Public Switched Telephone Network (PSTN), thereby allowing mobile stations to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Currently the most ubiquitous cellular communication system is the 2^{nd} generation communication system known as the Global System for Mobile communication (GSM). GSM uses a technology known as Time Division Multiple Access (TDMA), wherein user separation is achieved by dividing frequency carriers into 8 discrete time slots, which individually can be allocated to a user. A base station may be allocated a single carrier or a multiple of carriers. One carrier is used for a pilot signal which further contains broadcast information. This carrier is used by mobile stations for measuring of the signal level of transmissions from different base stations, and the obtained information is used for determining a suitable serving cell during initial access or handovers. Further description of the GSM TDMA communication system can be found in 'The GSM System for Mobile Communications' by Michel Mouly and Marie Bernadette Pautet, Bay Foreign Language Books, 1992, ISBN 2950719007.

To further enhance the services and performance of the GSM communication system, a number of enhancements and additions have been introduced to the GSM communication system over the years.

One such enhancement is the General Packet Radio System (GPRS), which is a system developed for enabling packet data based communication in a GSM communication system. Thus, the GPRS system is compatible with the GSM (voice) system and provides a number of additional services, including provision of packet data communication, which augments and complements the circuit switched communication of a traditional communication system. Furthermore, the packet based data communication may also support packet based speech services. The GPRS system has been standardised as an add-on to an existing GSM communication system, and can be introduced to an existing GSM communication system by introducing new network elements. Specifically, a number of Serving GPRS Support Nodes (SGSNs) and Gateway GPRS Support Nodes (GGSNs) may be introduced to provide a packet based fixed network communication.

Another enhancement is the Enhanced Data rate for GSM Evolution (EDGE) system, which comprises a radio interface transmission protocol using a number of techniques to provide higher throughput over the radio interface. Specifically, EDGE utilises higher order modulation schemes (8-PSK modulation), channel adaptation, Automatic Repeat Request (ARQ) schemes and incremental redundancy to provide a high data throughput. Furthermore, EDGE is particularly suited for packet based communication over the radio interface.

In particular, a radio access network known as a GERAN (GSM/EDGE Radio Access Network) has been standardised. The GERAN allows for traditional GSM services to be provided as well as the enhanced services and performance provided by EDGE and GPRS.

Currently, 3^{rd} generation systems are being rolled out to further enhance the communication services provided to mobile users. The most widely adopted 3^{rd} generation communication systems are based on Code Division Multiple Access (CDMA) wherein user separation is obtained by allocating different spreading and scrambling codes to different users on the same carrier frequency. The transmissions are spread by multiplication with the allocated codes thus causing the signal to be spread over a wide bandwidth. At the receiver, the codes are used to de-spread the received signal thereby regenerating the original signal. Each base station has a code dedicated for a pilot and broadcast signal, and as for GSM this is used for measurements of multiple cells in order to determine a serving cell. An example of a communication system using this principle is the Universal Mobile Telecommunication System (UMTS), which is currently being deployed. Further description of CDMA and specifically of the Wideband CDMA (WCDMA) mode of UMTS can be found in 'WCDMA for UMTS', Harri Holma (editor), Antti Toskala (Editor), Wiley & Sons, 2001, ISBN 0471486876.

The frequency band allocated for a cellular communication system is typically severely limited, and therefore the resource must be effectively divided between mobile stations. A fundamental property of a cellular communication system is that the resource is divided geographically by the division into different cells. Thus, a certain amount of resource (for example a frequency band) may at a given time be allocated to a given cell thereby reducing the resource allocation to neighbouring cells. In order to optimise the capacity of a cellular communication system, it is important to minimise the impact of interference caused by or to other mobile stations. An important advantage of a cellular communication system is that due to the attenuation of the radio signal with distance, the interference caused by communication within one cell is negligible in a cell sufficiently far removed, and therefore the resource can be reused in this cell.

However, the interference caused by transmissions in neighbouring cells is often the most significant source of interference in a cell. Hence, neighbour cell interference may not only limit the available capacity of the communication system but also increase the error rate of the communication between a base station and a mobile station. This may specifically mean that variations in the interference levels may result in specific transmissions being lost or received with unacceptably high error levels.

In GPRS or EDGE GPRS (EGPRS) systems, short data packets may be transmitted over the radio interface at random intervals. Due to the interference, these data packets may occasionally be lost. However, with the current (E)GPRS standards, the only available interference parameter is an average interference level per timeslot as measured by the base station or the mobile station. The network use the average interference level in the scheduling of data packets assuming that the average interference level is stable and thus representative of the actual interference level experienced by the subsequent transmissions.

However, as the actual interference level varies significantly, the interference levels experienced by data packets may be significantly higher than the average interference level. Hence, there is a significant probability of scheduled transmissions being lost. It would be advantageous if a system can be provided wherein an improved reliability of the transmissions can be provided and in particular wherein an error probability of transmissions may be reduced.

### Summary of the Invention

Accordingly, the Invention seeks to mitigate, alleviate or eliminate one or more of the above mentioned disadvantages singly or in any combination. Specifically, the inventor has realised that some messages are of higher importance than other messages. The inventor has further realised that these messages may be communicated with increased reliability if the interference level can be reduced for these messages.

According to a first aspect of the invention there is provided a communication system comprising: first communication means for communicating to a first communication unit in a first area; second communication means for communicating to a second communication unit in a second area; means in the first communication means for determining that a message is a priority message; means for communicating priority message information associated with the priority message from the first communication means to the second communication means; and wherein the second communication means is operable to modify a communication characteristic of the communication with the second communication unit in response to the communication priority message information such that interference to the priority message is reduced.

The invention may thus allow for dynamic information to be communicated between two communication means such that interference may be reduced for a priority message. This will allow for increased reliability of the priority message communication and specifically for a reduced error rate. The priority message may for example be associated with the operation of the communication system whereby the performance of the whole communication system may be improved. Specifically, the invention allows for the operation in one area of the communication system to be dynamically modified to suit the operation in another area.

The first and second area may be overlapping areas. The priority message information may specifically relate to a plurality of priority messages. Furthermore, the priority message information may be determined in advance of the generation and communication of the priority message. For example, it may be known that priority messages will be sent at given intervals and priority message information allowing for identification of these priority messages may be communicated. As a specific example, the priority message information may include information identifying a number of sub-time intervals in a given time interval that will comprise priority messages. The determination of a priority message may be a direct determination in response to characterirstics of a specific message or may be indirect and such as for example determined from a predetermined knowledge of the communication parameters of priority messages. For example, the priority message and/or priority message information may be determined in response to a predetermined scheduling protocol for priority messages. The priority messages and/or priority message information may further be determined by the first communication system in co-operation with other means. Specifically, the determination of the priority message and priority message information may include an interaction between the first and second communication means.

According to a feature of the invention, the communication characteristic is a transmit power.

The interference to the priority message is preferably reduced by reducing a transmit power of the second communication means when communicating with the second communication unit. By reducing the transmit power in the second area, when the priority message is communicated in the first area, the interference in the first area caused by the second communication means is reduced, thereby improving the reliability of the communication of the priority message. The power may specifically be reduced to a level where the interference in the first area is negligible yet some communication is still feasible between the second communication means and the second communication unit. Alternatively, the transmit power may be reduced to substantially zero power, e.g. by not communicating between the second communication means and the second communication unit during the priority message.

According to another feature of the invention, the second communication unit is operable to modify the communication characteristic by ceasing communication with the second communication for a time interval associated with the priority message. Preferably, no transmissions occur in the second area that may interfere with the priority message when this is communicated. Specifically, transmissions on the same or adjacent frequency bands or carriers are avoided. This allows for the interference reduction to be increased and/or maximised.

According to another feature of the invention, the communication characteristic is a transmission rate. Preferably, the transmission rate is reduced. The transmission rate may for example be a channel data rate or an information data rate. Reducing the transmission rate allows for increased energy per symbol for reduced transmit powers, and therefore allows for acceptable error performance at a reduced transmit power and thus reduced interference.

According to another feature of the invention, the communication characteristic is an order of the modulation scheme. Preferably, the order of the modulation scheme is reduced. Reducing the order of the modulation scheme allows for increased energy per bit for reduced transmit powers and therefore allows for acceptable error performance at a reduced transmit power and thus reduced interference.

According to another feature of the invention, the communication characteristic is an error protection scheme. Preferably, the error protection is increased. The error correction may for example be a Forward Error Correction (FEC) code. By increasing the error protection, data may be communicated with an acceptable error performance for reduced transmit powers. The information data rate may be reduced corresponding to the increased error protection. Hence, increased error protection may be used to reduce the required transmit power thereby reducing interference.

According to another feature of the invention, the communication characteristic is a spreading factor. Preferably, the spreading factor is increased and the associated data rate is decreased correspondingly. This allows for an increased spreading gain in a spread spectrum system and thus for reduced transmit power and interference.

According to another feature of the invention, the second communication means is further operable to modify the communication characteristic in response to a priority of the communication between the second communication unit and the second communication means.

Preferably, the modification of the communication characteristic depends on the priority of the information that may cause interference to the priority message. If the priority of the communication between the second communication unit and the second communication means is higher than the priority of the priority message, the communication characteristic is preferably unchanged, or may even be modified to increase the reliability of this communication at the expense of increased interference caused to the priority message. If the priority of the communication between the second communication unit and the second communication means is lower than the priority of the priority message, the communication characteristic is preferably modified to reduce interference to the priority message.

According to another feature of the invention, the priority message is a control message. Control messages typically have a significant impact on the operation of a communication system, and thus the performance of the communication system is typically very sensitive to loss of or errors in control messages. An improved performance and reliability of the communication system may thus be achieved by reducing interference to, and thus improving the reliability of, the communication of control messages.

According to another feature of the invention, the priority message information comprises identity information related to at least one communication resource sub-unit associated with the communication of the priority message. The priority message may be allocated one or more communication resource sub-units for the communication, and information allowing this to be identified is preferably included in the priority message information. This allows for the second communication unit to identify the parameters of the communication that may interfere with the priority message. The communication resource sub-unit may for example for a GSM based communication system be a carrier and time slot allocation.

According to another feature of the invention, the priority message information comprises a request for the second communication means to modify the communication characteristic for at least one communication resource sub-unit of the second communication means corresponding to the at least one communication resource sub-unit associated with the communication of the priority message.

Preferably, the communication sub-units of the first and second communication means correspond such that specific communication resource sub-units of the second communication means may be selected to have modified communication characteristics. Specifically, time slots of the second communication means corresponding to the time slots of the first communication means communicating in which the priority message is communicated may be modified.

According to another feature of the invention, the at least one communication resource sub-unit comprises at least one time interval. This allows for a simple system for reducing the interference to the first communication systems by modifying the communication characteristics of one or more time intervals corresponding to communication resource sub-units. The time intervals may specifically be time slots in a TDMA communication system.

According to another feature of the invention, the priority message information comprises at least one parameter selected from the group of: a cell identity; a time of the priority message; a priority of the priority message; a carrier identification; a time slot identification; and a frame identification. These parameters provide suitable information for identifying the characteristics of the priority message such as to enable the second communication means to determine the parameters of a communication that may interfere with the priority message.

According to another feature of the invention, the first communication means comprises a resource allocator for allocating communication resource units of the first communication means, the resource allocator being operable to allocate at least one communication resource unit to the priority message, and to communicate the priority message information comprising identification of the at least one communication resource unit to the second communication means.

A resource allocation of the first communication means thus preferably allows for priority message information to be generated. This may specifically allow for consideration of the reduced interference in the resource allocation.

According to another feature of the invention, the second communication means comprises a second resource allocator for allocating resource units of the second communication means, the second resource allocator being operable to allocate resources in response to the priority message information. A resource allocation of the second communication means is preferably such that no communication that will cause interference to the priority message is allocated. This allows for flexible and efficient resource allocation in the second area, while taking into account the potential impact on the communication of the priority message in the first area.

According to another feature of the invention, the communication system is a cellular communication system and the first and second area are a first and second cell. The invention allows for an improved reliability of priority messages in a first cell and thus allows for increased performance of the cellular communication system.

According to another feature of the invention, the first communication means comprises a first base station for communicating with the first communication unit, and the second communication means comprises a second base station for communicating with the first communication unit. The communication of different base stations may thus be co-ordinated such that interference to priority messages are reduced thus improving performance.

According to another feature of the invention, the first and second base stations are synchronized. This facilitates exchange of identification information that may be contained in the priority message information and allow for the second communication means to reliable modify the communication parameter when the priority message is communicated. For example, in a TDMA based communication system, time slots may be synchronised thus allowing the second communication unit to specifically modify the communication characteristic for time slots of the second base station that coincide with time slots of the first base station wherein the priority message is communicated.

According to another feature of the invention, the first communication means and second communication means are different base station systems. Each base station system may comprise a base station controller and one or more base stations. Typically, resource allocation is performed in the base station controller. The invention allows for reduced interference to priority messages despite the interferer being controlled by different base station controllers and thus resource allocation processes. Communication between the base station systems may for example be via a dedicated communication line or via a fixed network.

According to another feature of the invention, the communication between the first communication means and the first communication unit and the communication between the second communication means and the second communication unit are downlink communications. Downlink communication is particularly suited for interference reduction based on communication of priority message information. For example, no communication is required to the communication units and the interference relationship between base stations may be determined much easier than an interference relationship between communication units.

According to another feature of the invention, the cellular communication system is a Global System for Mobile communication (GSM) system. Hence, the invention may allow for increased reliability for communication of priority messages in a GSM cellular communication system and thus increased performed of this.

According to another feature of the invention, the cellular communication system is an Enhanced Data rate for GSM Evolution (EDGE) system. Hence, the invention may allow for increased reliability for communication of priority messages in an EDGE cellular communication system and thus increased performed of this.

According to another feature of the invention, the cellular communication system is a General Packet Radio System (GPRS) system. Hence, the invention may allow for increased reliability for communication of priority messages in a GPRS cellular communication system and thus increased performed of this.

According to a second aspect of the invention, there is provided method of interference reduction in a communication system including first communication means for communicating to a first communication unit in a first area and second communication means for communicating to a second communication unit in a second area; the method comprising the steps of: determining in the first communication means that a message is a priority message; communicating priority message information associated with the priority message from the first communication means to the second communication means; and modifying a communication characteristic of the communication with the second communication unit in response to the communication priority message information such that interference to the priority message is reduced.

These and other aspects and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 is an illustration of a cellular communication system in accordance with the prior art;
FIG. 2 is an illustration of a communication system in accordance with an embodiment of the invention;
FIG. 3 is an illustration of a time slot allocation of a first communication means of a communication system in accordance with an embodiment of the invention; and
FIG. 4 is an illustration of a time slot allocation of a second communication means of a communication system in accordance with an embodiment of the invention.

### Detailed Description of a Preferred Embodiment of the Invention

The following description focuses on an embodiment of the invention applicable to a GSM communication system including GPRS and EDGE enhancements. However, it will be appreciated that the invention is not limited to this application but may be applied to many other communication systems including for example 3^{rd} Generation Communication Systems.

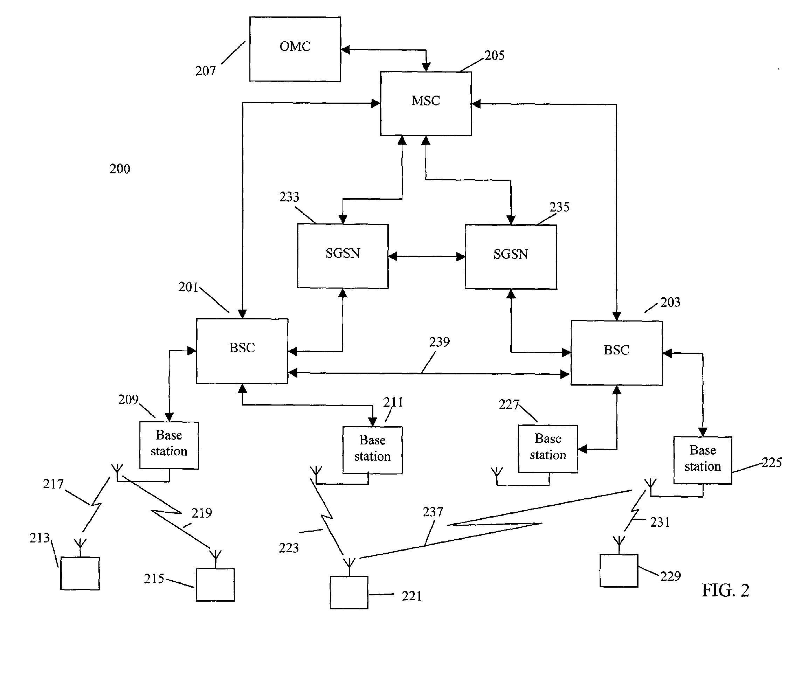

FIG. 2 is an illustration of a communication system in accordance with an embodiment of the invention. Specifically, the communication system is a GSM cellular communication system with EDGE and GSM functionality.

In a typical GSM cellular communication system, a large number of Base Station Controllers (BSCs) 201, 203 (two shown) are connected to a Mobile Services Switching Centre (MSC) 205. The MSC is the central switch centre and switches communication between different BSCs such that subscriber units connected to one BSC can communicate with subscriber units associated with other BSCs. In addition, the MSC is responsible for interfacing with other networks, performing authentication, some mobility management etc. The MSC 205 and typically the BSCs 201, 203 are connected to an Operations and Maintenance Centre (OMC) 207, where the operation and performance of the network is monitored and controlled by the network operator.

In a GSM cellular communication system, the BSCs 201 are further coupled to a plurality of base stations which for GSM are known as Base Station Transceivers (BTSs). The base stations communicate with communication units over the radio interface. The communication units may typically be a subscriber unit, a wireless user equipment, a mobile station, a communication terminal, a personal digital assistant, a laptop computer, an embedded communication processor or any communication element operable to communicate over the radio interface.

In the specific example of FIG. 2, the first BSC 201 is connected to two base stations 209, 211. One base station 209 communicates with two communication units 213, 215 over radio interface communication links 217, 219. Another base station 211, hereafter denoted as the serving base station 211, communicates with a first communication unit 221 over a first radio interface communication link 223.

The communication over the first radio interface communication link 223 is in the preferred embodiment by use of a transmission in accordance with the GSM, EDGE and/or GPRS communication standards. Specifically, the first communication unit communicates in allocated time slots on a GSM carrier of the serving base station 211. In the preferred embodiment, the first communication unit 221 is a GPRS communication unit being supported by a data packet service. Specifically, the serving base station 211 communicates data packets to the first communication unit 221 in a non-periodic semi-random way. The first communication unit 221 may for example be provided with an Internet access service.

The second BSC 203 is coupled to two base stations 225, 227. For brevity and clarity, the first of these base stations 225, hereafter denoted the interfering base station 225, is shown to be communicating with only one communication unit 229, hereafter denoted the second communication unit over an radio interface communication link 231. The second base station 227 is in the specific example of FIG. 2 shown not to be in communication with any communication units.

The communication system 200 further comprises a number of Serving GPRS Support Nodes (SGSNs) and Gateway GPRS Support Nodes (GGSNs) of which two are shown in FIG. 2. Specifically, FIG. 2 shows the first BSC 201 and the serving base station 211 coupled to a first SGSN 233, and the second BSC 203 and interfering base station 225 coupled to a second SGSN 235. Thus the first SGSN 233 is the serving SGSN for the first communication unit 221, and the second SGSN 235 is the serving SGSN for the second communication unit 229.

The SGSNs 233, 235 are part of the GPRS packet based interconnecting network introduced by the GPRS enhancement to the GSM communication system. The SGSNs comprise functionality for routing data from the GPRS communication units towards the desired destination. The SGSNs further provides mobility and session management functionality for the GPRS services. GPRS mobility management signalling is exchanged between the SGSN 233 and the SGSN 235, when ,for example, a GPRS communication unit roams from the area served by SGSN 233 to the area served by SGSN 235. The SGSNs may further be coupled to one or more Gateway GPRS Support Nodes (GGSNs) (not shown), which are operable to route data in the packet based network. In addition, the GGSNs specifically comprise interworking functions for interfacing to external communication systems such as e.g. the Internet.

In the example of FIG. 2, the serving base station 211 and the interfering base station 225 share the same carrier frequency. Hence, the communication on the radio interface communication links 223 and 231 are using the same frequency band. In the shown example, the cell supported by the serving base station 211 and the cell supported by the interfering base station 225 are the closest cells that share frequencies according to the frequency plan of the communication system.

Accordingly, the communication between the interfering base station 225 and the second communication unit 229 will cause interference to the communication between the serving base station 211 and the first communication unit 221 and vice versa. Specifically, the following description will focus on the downlink interference to the first communication unit 221. Hence, the transmissions from the interfering base station 225 will through a radio propagation path 237 be received as interference by the first communication unit 221. The interference caused by the interfering base station 225 may be significant and may specifically cause data packets to be received in error by the first communication unit 221.

For some data services, a loss of a data packet may not be critical. For example, if the service provided to the first communication unit 221 is that of an Internet browse service, an error may simply result in a retransmission of that data packet or in a minor error of the received web page. However, retransmissions significantly increase the resource usage of a service and increase the delay. Hence, for some services, such as real time data services, loss of data packets may be very critical.

Furthermore, control messages are communicated between the serving base station 211 and the first communication unit 221, and the interference from the interfering base station 225 may cause these messages to be lost. This may significantly impact the performance of the first communication unit 221 and of the communication system as a whole. As a specific example for a GRPS communication system, if a Packet Timeslot Reconfigure control message is lost, the communication unit 221 will be unable to change its radio configuration according to what the serving BSC 203 has requested and packet transfer will suddenly be dropped.

In the preferred embodiment, the potential interference from the interfering base station 225 may specifically be reduced for priority messages. In accordance with this embodiment, the first communication means, comprising the first BSC and the serving base station 211, comprise functionality for determining that a message is a priority message. For example, the first BSC and/or the serving base station 211 may detect that a specific message to be transmitted to the first communication unit 221 is of relatively higher importance than other messages to the first communication unit 221. The message may for example be a control message instructing the first communication unit 221 to perform a specific operation such as e.g. handover to another cell. The message need not be an individual message with a specific information content but may be any communication or part of a communication that is considered of increased importance. For example, the priority message may be a section of a data message or data stream being of relatively higher priority than the remaining part of the message or stream.

Specifically, for a GSM/EDGE system, a priority message may be a specific block of time slots comprising data of increased importance.

It is within the contemplation of the invention, that any suitable algorithm or criterion for determining that a message is a priority message may be used. However, in the preferred embodiment, the determination is achieved by predetermining a number of control messages as priority messages. The first BSC 201 or serving base station 211 comprises memory means wherein this information is stored. Accordingly, the first BSC 201 or serving base station 211 compares each message to the stored information and determines a message as a priority message if a match is found.

In the preferred embodiment, the first communication means, comprising the first BSC 201 and the serving base station 211, further comprise functionality for generating priority message information associated with the priority message and for communicating this to the second communication means comprising the second BSC 203 and the interfering base station 225.

In the preferred embodiment, the priority message information comprises identity information allowing the second communication means to determine relevant communication parameters of the priority message. Specifically, the priority message comprises information on the carrier and time slots that will be used by the serving base station 211 for communicating the priority message.

The second communication means, comprising the second BSC 203 and the interfering base station 225, further comprise functionality for receiving the priority message information from the first communication means. In the preferred embodiment, the communication of the priority message information is preferably over a communication link 239 between the first and second communication means, and specifically this link may be realised on the Iur-g interface between BSCs of a GSM communication system or alternatively or additionally by a tunnelling mechanism through the SGSNs.

The second communication means furthermore comprise functionality for modifying a communication characteristic of the communication with the second communication unit 229 in response to the received communication priority message information such that interference to the priority message is reduced. Specifically, the second communication means comprise functionality for reducing the interference to the first communication unit for the time interval in which the priority message is transmitted to the first communication unit 221.

In the preferred embodiment, the priority message information comprises a request for the second communication means to modify the communication characteristic of at least one time slot or block of time slots that correspond to the time at which the priority message is transmitted by the serving base station 211.

Hence, in this embodiment the first BSC may detect that a message allocated for transmission to the first communication unit 221 is a priority message for which the error probability is preferably reduced below the average error rate. Accordingly, it generates priority message information comprising the carrier frequency and time slot identity for the transmission of the priority message and communicates this to the second BSC 203. The second BSC 203 receives the priority message information and correlates the received carrier and time slot information with the timing and carrier parameters of the interfering base station 225 thereby determining which time slots and which carrier may interfere with the priority message. It then proceeds to modify the communication characteristic used for these time slots, for example by not allocating any data to be transmitted during these time slots.

It is within the contemplation of the invention, that any method of correlating the operating parameters of the second communication means with the priority message information in order to determine which communication of the second communication means may interfere with the priority message may be used. For example, techniques may be used to determine timing offsets between the two base stations as is well known in the art. However, in the preferred embodiment the base stations are time slot synchronised such that time slots are aligned between base stations.

Hence, in the preferred embodiment a system is provided wherein communication reliability is increased by a first communication means requesting that the interference level is reduced on some specific time slots during the occurence of radio blocks such as important control blocks. The specific method comprises transferring information from one cell to another to indicate which time slot or which radio block on a time slot shall be set to idle or low priority. This allows for the interference to be reduced for important messages. It furthermore enables the allocation and communication of the priority message to take into account that the interference level will be reduced. Hence, the system may continually and dynamically adjust the parameters and performance of one cell to take into account the impact on important communications in a different cell.

In the preferred embodiment, the interference is preferably reduced by the interfering base station 225 not communicating during the time interval of the priority message. This is the simplest interference reduction to implement and results in the largest interference reduction.

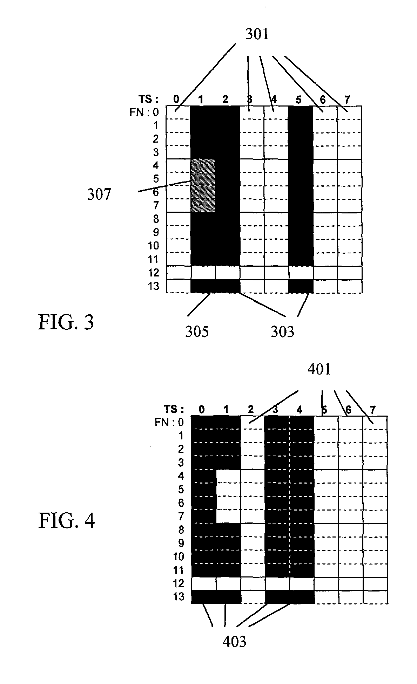

FIG. 3 is an illustration of a time slot allocation of a first communication means of a communication system in accordance with an embodiment of the invention. FIG. 4 is an illustration of a time slot allocation of a second communication means of a communication system in accordance with an embodiment of the invention.

FIG. 3 and 4 illustrates the eight time slots of each frame horizontally and consecutive frames vertically for the serving base station 211 and the interfering base station 225 respectfully. As illustrated in FIG. 3, the serving base station 211 does not communicate with any communication units in Time Slot number 0, 3,4, 6 and 7 301 but communicates with communication units in Time Slot number 1 (305), 2 and 5 303. No data communication is performed for Frame number 12 as this is reserved for timing advance channels, synchronisation channels and neighbour cell measurements.

More specifically, the serving base station 211 communicates with the first communication unit 221 in Time Slot number 1 305. The communication with the first communication unit 221 comprises normal data except for one radio block 307 in Frames 4 to 7, wherein data of increased importance is communicated. Specifically, a control message may be communicated to the first communication unit 221 during this radio block. Hence, in this example, a priority message is transmitted in Time Slot number 1 Frame numbers 4-7.

As illustrated in FIG. 4, the interfering base station 225 does not communicate with any communication units in Time Slot number 2, 5,6 and 7 401 but communicates with communication units in Time Slot number 0, 1, 3 and 4 403. In the example shown, the serving base station 211 and interfering base station 225 are synchronised such that the time slots are aligned, and thus a communication by the interfering base station 225 for a given time slot number and frame number will be received by the first communication unit 221 in the time slot(s) with the same time slot number and frame number. Hence, in response to receiving priority message information from the first BSC 201 (or the serving base station 211), the second communication means modifies the communication of the interfering base station 225 such that no data is communicated in the time slots corresponding to the priority message. Thus, a pause in the communication to the second communication unit is created for Time Slot number 1 Frame numbers 4-7, thereby reducing the interference and increasing the reliability of the priority message between serving base station 211 and communication unit 221.

Depending on the service provided to the second communication unit, the data of the missing communications may be transmitted in the subsequent radio blocks such that only a small increased delay results. In other embodiments, the data of the missing radio block may simply be discarded. For example, if a speech service is provided to the second communication unit 229, the degradation in speech quality caused by a short loss of data may be insignificant.

In the preferred embodiment, the communication characteristic is thus modified such that the communication ceases between the second communication unit 229 and the interfering base station 225 for the duration of the priority message. However, in other embodiments transmission is not ceased completely but rather the communication characteristic is changed such that interference is reduced but some communication is still possible.

Specifically, the transmit power of the interfering base station 225 is reduced for the duration of the priority message. Preferably, this is associated with a modification of transmission parameters which results in a decreased error rate for the reduced transmit powers. This is typically associated with a reduction in the transmitted information data rate.

Hence, in one embodiment the transmit power is reduced for the communication during the priority message whereas an error protection is increased. As a specific example, the transmit power may be reduced by 3dB and a more robust modulation and coding scheme may be used. For example, a half rate forward error correction scheme may be substituted by a third rate forward error correction scheme. This allows for communication to be continued with the second communication unit 229 albeit at a reduced data rate. The second communication unit is in this embodiment provided with advance information identifying the time slots in which the modified communication characteristics apply.

In another embodiment, a reduction in transmit powers is associated with a reduction in the order of the symbols of the modulation scheme. For example, the transmit power may be reduced by 3dB and the modulation scheme may be modified from one using 8-PSK (Phase Shift Keying) symbols to one using GMSK (Gaussian Minimum Shift Keying) symbols.

In another embodiment, wherein the communication system is a spread spectrum communication system, a reduction in transmit power may be associated with an increased spreading factor. For example, a 3dB reduction in power may be compensated by a halving the data rate and doubling the spreading factor.

In the preferred embodiment, the priority message information comprises identity information related to at least one communication resource sub-unit associated with the communication of the priority message. Specifically, the priority message comprises information allowing the second communication means to identify the time slots that will coincide with the priority message.

As such, the priority message information in the preferred embodiment comprises a time of the priority message preferably in the form of a frame and time slot identification such as a frame number and time slot number(s). Preferably, the priority message information furthermore comprises a carrier identification allowing the second communication means to determine which carrier will potentially interfere with the priority message. Alternatively or additionally, the priority message information may include a cell identity. The cell identity may for example be used by the second BSC 203 to determine which base stations and/or which carriers may potentially interfere with the priority message.

In one embodiment, the second communication means further comprises functionality for modifying the communication characteristic in response to a priority of the communication between the second communication unit and the second communication means. In this embodiment, the priority message information preferably includes a priority indication. This priority indication is preferably a measure of the relative importance of the priority message. The second communication means may furthermore determine a priority of the communication to the second communication unit which may potentially be interfering. The modification of the communication characteristic preferably depends on the relative importance of the priority message and the potentially interfering communication. For example, the second communication means may cease the communication to the second communication during the priority message if the priority message is of a higher priority than the potentially interfering communication but proceed otherwise.

In the preferred embodiment, the first and second communication means further comprise resource allocators. In the example of FIG. 2, the BSCs 201, 233 and/or the SGSNs 233, 235 comprise functionality for allocating the time slots of the radio interface to different communication units and services. The first resource allocator of the first communication means is in this embodiment operable to identify priority messages. These are allocated to specific time slots according to a scheduling algorithm. When a priority message is allocated, the first resource allocator additionally generates a priority message information message, which is communicated to the second communication means that accordingly modifies a characteristic of the communication.

Preferably, in this embodiment, a second resource allocator in the second communication means receives the priority message information. The allocation of time slots takes the priority message information into account when allocating time slots. Specifically, for a packet based allocation, the scheduling algorithm comprises not allocating packets to time slots that may interfere with the priority message. If the loading is such that it is not practical to leave time slots empty, the scheduling is such that data packets expected to cause the least interference are allocated to time slots that may interfere with a priority message. For example, the time slots that may interfere with a priority message are preferably allocated to communication units with low associated transmit power, such as communication units in close vicinity of the interfering base station 225.

In the described example, the first and second communication means belong to different base station systems. However, it will be apparent that the first and second communication means may be distributed in any suitable way and/or located in any suitable physical, logical or structural location. Specifically, the first and second communication means may belong to the same base station system and the priority message information may be transmitted internally in the base station system. For example, the priority message information may be communicated between different functional modules of the same physical unit, such as a BSC. Alternatively or additionally, the priority message information may be communicated between different software routines operating on one data processor.

The invention can be implemented in any suitable form including hardware, software, firmware or any combination of these. However, preferably, the invention is implemented as a program running on one or more data processors and/or digital signal processors. The functional modules, elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements, functional modules or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. A communication system comprising:
first communication means for communicating to a first communication unit in a first area;
second communication means for communicating to a second communication unit in a second area;
means in the first communication means for determining that a message is a priority message;
means for communicating priority message information associated with the priority message from the first communication means to the second communication means; and wherein
the second communication means is operable to modify a communication characteristic of the communication with the second communication unit in response to the communication priority message information such that interference to the priority message is reduced.

2. A communication system as claimed in claim 1 wherein the communication characteristic is a transmit power.

3. A communication system as claimed in any previous claim wherein the second communication unit is operable to modify the communication characteristic by ceasing communication with the second communication for a time interval associated with the priority message.

4. A communication system as claimed in any previous claim wherein the communication characteristic is a transmission rate.

5. A communication system as claimed in claim 4 wherein the communication characteristic is an order of the modulation scheme.

6. A communication system as claimed in claim 4 wherein the communication characteristic is an error protection scheme.

7. A communication system as claimed in claim 4 wherein the communication characteristic is a spreading factor.

8. A communication system as claimed in any previous claim wherein the second communication means is further operable to modify the communication characteristic in response to a priority of the communication between the second communication unit and the second communication means.

9. A communication system as claimed in any previous claim wherein the priority message is a control message.

10. A communication system as claimed in any previous claim wherein the priority message information comprises identity information related to at least one communication resource sub-unit associated with the communication of the priority message.

11. A communication system as claimed in claim 10 wherein the priority message information comprises a request for the second communication means to modify the communication characteristic for at least one communication resource sub-unit of the second communication means corresponding to the at least one communication resource sub-unit associated with the communication of the priority message.

12. A communication system as claimed in claim 10 or 11 wherein the at least one communication resource sub-unit comprises at least one time interval.

13. A communication system as claimed in any previous claim wherein the priority message information comprises at least one parameter selected from the group of:
a. a cell identity;
b. a time of the priority message;
c. a priority of the priority message;
d. a carrier identification;
e. a time slot identification; and
f. a frame identification.

14. A communication system as claimed in any previous claim wherein the first communication means comprises a resource allocator for allocating communication resource units of the first communication means, the resource allocator being operable to allocate at least one communication resource unit to the priority message, and to communicate the priority message information comprising identification of the at least one communication resource unit to the second communication means.

15. A communication system as claimed in any previous claim wherein the second communication means comprises a second resource allocator for allocating resource units of the second communication means, the second resource allocator being operable to allocate resources in response to the priority message information.

16. A communication system as claimed in any previous claim wherein the communication system is a cellular communication system and the first and second area are a first and second cell.

17. A communication system as claimed in claim 16 wherein the first communication means comprises a first base station for communicating with the first communication unit, and the second communication means comprises a second base station for communicating with the first communication unit.

18. A communication system as claimed in claim 16 wherein the first and second base stations are synchronized.

19. A communication system as claimed in any of the claims 16 to 18 wherein the first communication means and second communication means are different base station systems.

20. A communication system as claimed in any of the claims 16 to 19 wherein the communication between the first communication means and the first communication unit and the communication between the second communication means and the second communication unit are downlink communications.

21. A communication system as claimed in any of the claims 16 to 20 wherein the cellular communication system is a Global System for Mobile communication (GSM) system.

22. A communication system as claimed in any of the claims 16 to 21 wherein the cellular communication system is an Enhanced Data rate for GSM Evolution (EDGE) system.

23. A communication system as claimed in any of the claims 16 to 21 wherein the cellular communication system is a General Packet Radio System (GPRS) system.

24. A method of interference reduction in a communication system including first communication means for communicating to a first communication unit in a first area and second communication means for communicating to a second communication unit in a second area; the method comprising the steps of:
determining in the first communication means that a message is a priority message;
communicating priority message information associated with the priority message from the first communication means to the second communication means; and
modifying a communication characteristic of the communication with the second communication unit in response to the communication priority message information such that interference to the priority message is reduced.

25. A computer program enabling the carrying out of a method according to claim 24.

26. A record carrier comprising a computer program as claimed in claim 25.
